# EUROPEAN PATENT APPLICATION

(11) **EP 1 463 312 A2**
(43) Date of publication of application: **29.09.2004**
(21) Application number: 04075802.1
(22) Date of filing: 15.03.2004
(51) Int. Cl.: H04N 5/76

(54) **Video reproducing method and apparatus and system using the same**

(30) Priority: 13.03.2003 KR 2003015711
(71) Applicant: LG Electronics Inc., Seoul 150-875 (KR)
(72) Inventor: Kyong Roo, Yoon, Kangnam-gu Seoul (KR); Jin Ho, Hyun, Chunsangyeon-dong Kyungg-do (KR); Sung Bae, Jun, Goomchun-gu Seoul (KR)
(74) Representative: Ekström, Nils

(57) **Abstract**

Disclosed is a video reproducing method and system which is capable of reproducing a video stream under a maximum reflection of an actually desired location by selecting an optimum location within a predetermined section set up with reference to a location arbitrarily selected by a drag and play function.

## Description

### BACKGROUND OF THE INVENTION

### Field of the Invention

The present invention relates to a video reproducing apparatus, and more particularly, to a video reproducing method and system, which is capable of reproducing a video stream from a desired location using a drag and play function and an intelligent skip function.

### Description of the Related Art

As multimedia contents become vast in these days, there is an increasing demand for an automated system that can select data desired by a user.

Particularly, such a demand is increasing much more due to a development of a video recording/reproducing apparatus, such as personal video recorder (PVR), which records an incoming video stream and reproduces the recorded video stream.

In the video recording/reproducing apparatus such as PVR, there is a demand for a searching function, which is useful for edition of user's own content as well as browsing. In other words, users want to have the opportunity to edit and store portions that users want to view while having the option of excluding advertisements or uninteresting portions.

In addition, the video recording/reproducing apparatus such as PVR can record contents of an over-the-air video stream on a digital media and request a replay of a corresponding content at any time. Further, the video recording/reproducing apparatus can provide a random access to desired location or a high-speed fast forward function, which is impossible in an analog video, and can provide an instant movement to a random location.

Specifically, users can view desired portions by performing a drag and play function using a remote controller. However, conventional input devices such as a state of the art remote controller does not support the use of a drag and play function. In other words, in a PVR using a state of the art remote controller a random access to the content is provided by dividing the total amount of the contents into several small groups, a probability of moving to meaningless scenes (for example, an advertisement or an undesired scene) is increased. Accordingly, in order for moving to a desired location, users must use additional keys, such as fast forward (FF), fast rewind (FR), instant replay, skip forward, and the like, from a random accessed location.

A time-based skip is a typical method for providing a random access to a user in such a PVR environment. The time-based skip can provide a movement to a desired location by moving a reproduction location of a video stream to a location corresponding to 20 seconds after a current location or 7 seconds before a current location. According to the time-based skip, however, it is impossible to accurately move to the desired location. Further, a large number of user inputs are required for moving to an approximate location.

As one method for overcoming the drawbacks of the conventional instant replay function or the conventional drag and play function, a skip function based on semantic/structural information of the contents is disclosed in Korean Patent Application No. 2002-12489. Also, an intelligent skip function using a simple scene change analysis without regard to genre information is disclosed in Korean Patent Application No. 2002-82990. According to the Korean Patent Application Nos.2002-12489 and 2002-82990, it is possible to easily move to a start location of a scene which a desired location belongs to.

In case a searching range is very wide, however, the skip function based on the structural/semantic information or the intelligent skip function cannot search a location that a user desires actually. Accordingly, the systems described in the prior art do not perform adequately when searching in wide ranges, which is a great demerit of such systems.

### SUMMARY OF THE INVENTION

Accordingly, the present invention is directed to a video reproducing method and system that substantially obviates one or more problems due to limitations and disadvantages of the related art.

An object of the present invention is to provide a video reproducing method and system which is capable of reproducing a video stream under a maximum reflection of an actually desired location by selecting an optimum location within a predetermined section set up with reference to a location arbitrarily selected by a drag and play function.

Another object of the present invention is to provide a video reproducing method and system which is capable of reducing the demand for user's key inputs by adding an intelligent skip function to a drag and play function.

Additional advantages, objects, and features of the invention will be set forth in part in the description which follows and will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a video reproducing method is characterized in that a second movement location is selected among a plurality of candidate locations existing within a window, the window being set up with reference to a first movement location selected by a user's request for a drag and play.

In another embodiment of the present invention, a video reproducing method includes the steps of: selecting a first movement location in a video stream according to a request for a drag and play; setting up a window designating a predetermined section with reference to the first movement location; selecting one of a plurality of candidate locations as a second movement location, the plurality of candidate locations existing within the window; and performing a reproduction from the second movement location.

In further another embodiment of the present invention, a video reproducing method includes the steps of: selecting a first movement location in a video stream according to a request for a drag and play; setting up a window designating a predetermined section with reference to the first movement location; selecting one of a plurality of candidate locations as a second movement location on a basis of the window, the plurality of candidate locations being determined according to the user's request for an intelligent skip; and performing a reproduction from the second movement location.

In another aspect of the present invention, a video reproducing system includes: means for selecting a first movement location according to in a video stream according to a request for a drag and play; means for setting up a window designating a predetermined section with reference to the first movement location; means for selecting one of a plurality of candidate locations as a second movement location, the plurality of candidate locations existing within the window; and means for performing a reproduction from the second movement location.

In further another aspect of the present invention, a video reproducing apparatus includes: an input means for inputting a drag and play command; a control means for selecting a first movement location according to the inputted drag and play command, selecting one of candidate locations as a second movement location, the candidate locations existing within a predetermined section with reference to the selected first movement location, and controlling a reproduction to be performed from the second movement location; a media storage means for storing video streams to be provided according to a request of the control means; an index storage means for storing semantic/structural information or shot information to be provided according to a request of the control means; and a display means for displaying the video stream from the second movement location determined by the control means.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a flowchart showing a video reproducing method according a preferred embodiment of the present invention;

FIG. 2 is a view showing a method of selecting a location of a random access with respect to a request for a drag and play according to a preferred embodiment of the present invention;

FIGs. 3A and 3B are views showing a method of setting a window considering a directionality according to a preferred embodiment of the present invention;

FIG. 4 is a view showing another method of setting up a window according to a preferred embodiment of the present invention;

FIG. 5 is a view showing further another method of setting up a window according to a preferred embodiment of the present invention;

FIG. 6 is a view showing a method of determining several candidate locations contained in a window according to a preferred embodiment of the present invention;

FIG. 7 is a view showing a method of selecting a location, which a user desires actually, according to a preferred embodiment of the present invention; and

FIG. 8 is a schematic view of a video reproducing apparatus according to a preferred embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In order to overcome a drawback occurring when an existing random access is used to move to a location desired by a user, a drag and play function is used to select a first movement location, and then, a reproduction is performed by selecting an optimum second movement location around the selected movement location.

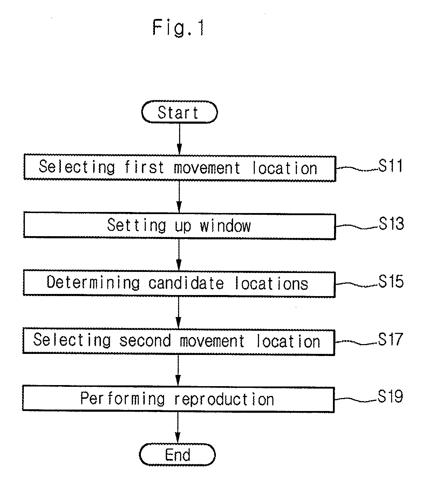

Hereinafter, a video reproducing method according to the present invention will be described in detail with reference to FIG. 1.

FIG. 1 is a flowchart showing a video reproducing method according to a preferred embodiment of the present invention.

Referring to FIG. 1, a first movement location is selected according to a user's request for a drag and play (S11). Here, the first movement location represents an arbitrary random location according to the request for the drag and play.

Using the drag and play function, the user can request a movement to an arbitrary random location in a video stream. Such a drag and play function may use a drag and drop function of a mouse. In addition, the drag and play function can move a portion representing a current reproduction location in a predetermined direction, that is, a forward direction or a reverse direction, when a specific key of a remote controller is continuously pressed, and can return an information on a corresponding location when the corresponding key is released, so that a normal reproduction is performed from the corresponding location.

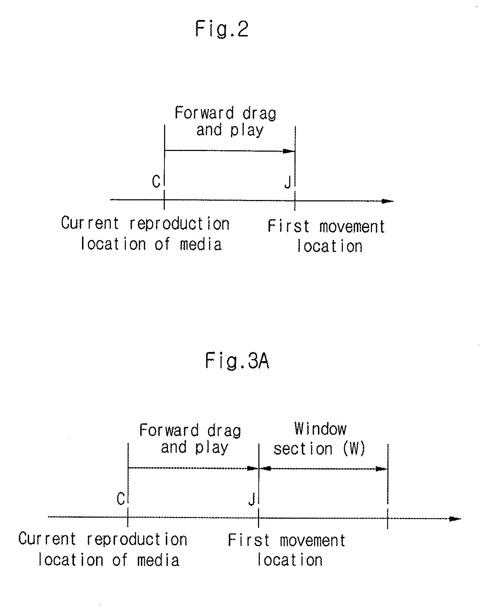

If the user executes the drag and play function in this manner, a movement location requested by the user is recognized and a corresponding location is calculated, then moving to the corresponding location. At this time, a directionality of the first movement location is determined according to the user's selection of a forward drag and play or a reverse drag and play, then moving to a corresponding location. For example, as shown in FIG. 2, if the user requests the forward drag and play, a directionality is considered by comparing a time relationship between a current reproduction location of the media and a location requested by the user. In this case, the forward direction is determined since the location requested by the user is disposed after the current reproduction location in view of time. Accordingly, the current reproduction location moves to the first movement location on which the forward direction is reflected.

If the first movement location is selected, a window is set up with reference to the first movement location (S13).

The setup of the window can be implemented using various methods. Among them, three embodiments will be described below.

A first embodiment is to set up the window in one direction with reference to the first movement location, a second embodiment is to set up the window in a bilateral time symmetry with reference to the first movement location, and a third embodiment is to set up the window considering a weight according to a direction in the bilateral time symmetry of the second embodiment.

In detail, according to the first embodiment, the window is set up in one direction considering a directionality with reference to the first movement location selected by a user's request for the drag and play function. For example, as shown in FIG. 3A, in case the user requests the forward drag and play, a predetermined section ranging from the first movement location J to a predetermined location is set up as the window W. Here, the first movement location J is selected in the forward direction and the predetermined location is disposed after the first movement location J in view of time.

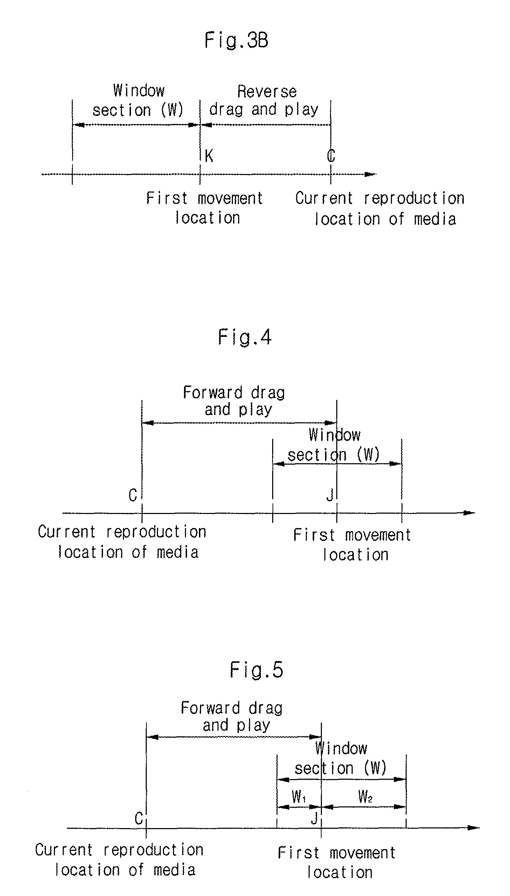

In addition, as shown in FIG. 3B, in case the user requests the reverse drag and play, a predetermined section ranging from the first movement location K to a predetermined location is set up as the window W. Here, the first location K is selected in the reverse direction and the predetermined location is disposed before the first movement location K in view of time.

Here, it is preferable to predefine a size of the predetermined section considering the quantity of the media.

The above-described method minimizes a user's confusion with a user interface component that indicates the current reproduction location, thereby preventing a confusion that occurs in the user interface.

The method of setting up the window according to the second embodiment is implemented based on an assumption that the user cannot designate an accurate location in practice. In other words, the window is set up in a bilateral time symmetry with reference to the first movement location, which is selected by a user's request for the drag and play, without regard to a directionality.

For example, as shown in FIG. 4, in case an arbitrary first movement location J is selected by the user's request for the drag and play, the window W including predetermined sections before and after the first movement location J is set up.

Since most of the users cannot designate an accurate reproduction location in practice, this method can be usefully applied in such an environment.

In the method of setting up the window according to the third embodiment, the window is set up considering a weight according to a direction in the bilateral time symmetry. In other words, the window is set up to assign high weight in a corresponding direction according to the user's request for the forward or reverse drag and play.

For example, as shown in FIG. 5, the window is set up in a bilateral time symmetry with reference to the first movement location J selected by the user's request for the forward drag and play. At this time, a higher weight is assigned to a forward window W2, so that the forward window W2 is set up wider than the reverse window W1. In FIG. 5, there is exemplarily shown the case that a weight ratio of the forward window W2 to the reverse window W1 is 2:1. Of course, in case the first movement location is selected by the reverse drag and play, the reverse window is set up wider than the forward window. This method has advantages of both the first and second embodiments.

Like this, if the window is set up by any one of the first to third embodiments, candidate locations desired by the user are determined within the set window (S15).

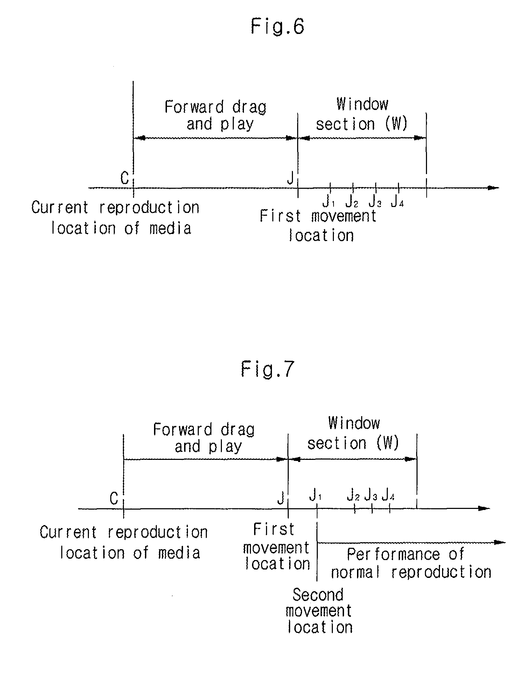

In other words, change locations of semantic/structural information existing within the set window are searched and the corresponding change locations are determined as the candidate locations desired by the user. The semantic/structural information is extracted from the corresponding video stream and stored. Accordingly, the corresponding candidate locations are determined by searching the change locations of the semantic/structural information existing within the window section among the semantic/structural information with respect to the stored corresponding video stream. For example, as shown in FIG. 6, the candidate locations J1, J2, J3 and J4 are determined by searching the change locations of the semantic/structural information existing within the window W set by the user's request for the forward drag and play.

Meanwhile, aside from this, the candidate locations can be determined by the intelligent skip function. A shot is defined as a single recording sequence having a shot start location and a shot end location. A group of shots is constituted by a plurality of shots. In other words, if the user requests the intelligent skip at the first movement location J, a previously stored Group Of Shots (GOS) is extracted, and then, the corresponding change locations are determined as the desired candidate locations by searching the change locations of shot information existing within the window section with reference to the first movement location J. For this purpose, the information must be extracted from the corresponding video stream by GOS unit and stored.

Here, the GOS can be defined as a sequence of shots having identical characteristic, and the identical characteristic of the GOS can be defined with a shot length. Additionally, it can be defined that long shot having a length greater than a predetermined level constitutes one GOS independently. In this case, sequential shots each having a length less than a predetermined level belong to one GOS, and sequential shots each having a length more than the predetermined level constitutes one GOS respectively. Since the shot length information is easily obtained from the information of "shot end location - shot start location", the GOS information need not be described independently of the shot information. However, the GOS information can be previously recorded independently of the shot information in order to reduce a reaction time of the intelligent skip.

It is preferable that a great number of candidate locations determined within the window section exist and, with its reflection, the window section must be set up with an appropriate size.

If the plurality of candidate locations desired by the user are determined in this manner, one candidate location (for example, the second movement location J2) among the plurality of candidate locations J1, J2, J3 and J4 is selected as an optimum reproduction location (S17), as shown in FIG. 6.

The selection of the second movement location can be implemented using various methods. Among them, four embodiments will be described below.

A first embodiment is to select the second movement location by using a weight according to an offset between the candidate locations and the first movement locations within the window, and a second embodiment is to select the second movement location by using a weight according to a length of a semantic/structural segment existing within the window. A third embodiment is to select the second movement location by using a weight according to the lengths of shots existing within the window, in case the plurality of candidate locations are determined by the intelligent skip. A fourth embodiment is to select the second movement location by considering both of the above weights, that is, the weight according to the offset between the candidate locations and the first movement location and the weight according to the length of the semantic/structural segment.

In the method of selecting the second movement location according to the first embodiment, weights are differently assigned according to the offset between the first movement location and the candidate locations, and the candidate location having the highest weight is selected as the second movement location. For example, referring to FIG. 7, the largest weight of 1 is assigned to a first candidate location J1 having the smallest time offset, and a weight of 0.8 is assigned to a second candidate location J2. Then, a weight of 0.6 is assigned to a third candidate location, and a weight of 0.4 is assigned to a fourth candidate location. Based on the weights assigned to the respective candidate locations, the first candidate location J1 having the largest weight can be selected as the second movement location which is the optimum reproduction location.

In the method of selecting the second movement location according to the second embodiment, the weights are differently assigned according to the lengths of the semantic/structural segments existing within the window, and the candidate location contained in the segment having the largest weight is selected as the second movement location.

For example, as shown in FIG. 7, the segment lengths of the respective candidate locations become smaller in a following order: a segment containing the first candidate location; a segment containing the fourth candidate location; a segment containing the second candidate location; and a segment containing the third candidate location. Accordingly, the weights of 1, 0.8, 0.6 and 0.4 are assigned to the segments containing the first, fourth, second and third candidate locations, respectively. Hence, the first candidate location contained in the segment having the largest weight can be selected as the second movement location.

In the method of selecting the second movement location according to the third embodiment, in case the candidate locations are determined by the intelligent skip, the weights are differently assigned according to the lengths of the shots based on the GOS information, and the candidate location contained in the shot having the largest weight is selected as the second movement location.

Finally, the method of selecting the second movement location according to the fourth embodiment has the advantages of both the first and second embodiments. The weight according to the offset between the candidate locations and the first movement location and the weight according to the lengths of the semantic/structural segments are assigned, and a total weight is calculated by adding or multiplying the assigned weights. The candidate location having the largest weight among the calculated weights is selected as the second movement location.

For example, if the weights according to the first and second embodiments are given like a following Table 1, it can be seen that the total weight of the first candidate location is largest. Accordingly, the first candidate location is selected as the second movement location.

**[Table 1]**

| Candidate | Weight (A) | Weight (B) | Total weight |
|---|---|---|---|
| locations | according to time offset | according to segment length | (A*B) |
| First candidate location (J1) | 1 | 1 | 1 |
| Second candidate location (J2) | 0.8 | 0.6 | 0.48 |
| Third candidate location (J3) | 0.6 | 0.4 | 0.24 |
| Fourth candidate location (J4) | 0.4 | 0.8 | 0.32 |

Referring again to FIG. 1, if the second movement location is selected using any one of the first to fourth embodiments, the video stream is reproduced from the selected second movement location (S19). The second movement location represents a location that the user desires actually.

As described above, the video reproducing method of the present invention selects the first movement location, which is the random access location, according to the user's request for the drag and play. Then, the window is set up with reference to the selected first movement location, and the change locations of the semantic/structural information existing within the set window or the change locations of the GOS-based shot information are determined as the candidate locations to be reproduced. The weights are applied to the determined candidate locations and one candidate location is selected as the second movement location desired by the user. Then, the video stream is reproduced from the selected location. By doing so, the user can view the video stream from the desired location. Accordingly, the present invention can solve the problems of the related art, in which the video stream is not reproduced from the actually desired location since the random access location is reproduced as it is and an additional user input is required for reproducing the video stream from the desired location.

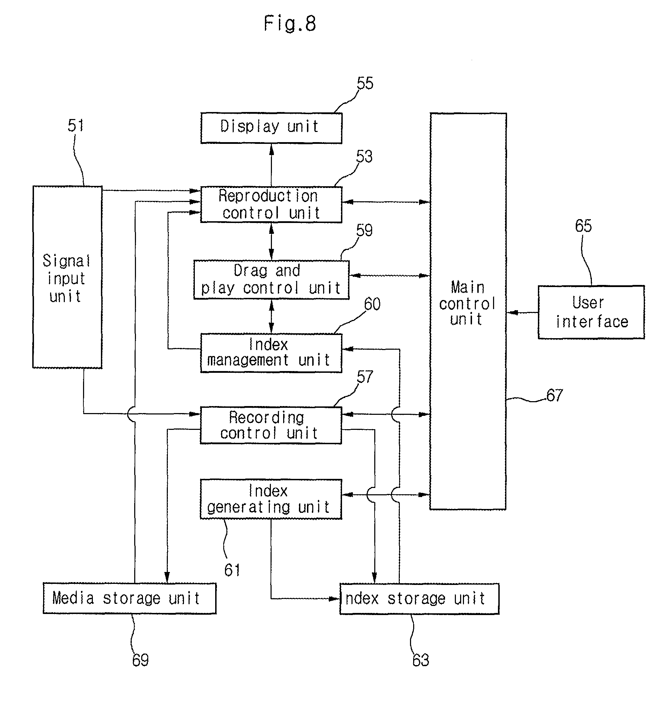

Hereinafter, a video reproducing apparatus for implementing the above-described video reproducing method will be described with reference to FIG. 8.

FIG. 8 is a schematic view of a video reproducing apparatus according to a preferred embodiment of the present invention.

Referring to FIG. 8, the video reproducing apparatus is an apparatus that both can perform recording and reproduction. Preferably, the video reproducing apparatus is a PVR.

In the video reproducing apparatus of the present invention, a signal input unit 51 is a source to which digital audio/video signals are inputted. A display unit 55 is an output means (for example, monitor and speaker) for outputting the digital audio/video signals.

A user interface 65 is an input means (for example, keyboard, mouse, remote controller and button) for receiving a user's input command.

A reproduction control unit 53 performs a control operation to reproduce the video stream inputted through the signal input unit 51 and display the video stream on the display unit 55. Additionally, in case the user's request for the drag and play is inputted, the reproduction control unit 53 provides a corresponding video stream to a drag and play control unit 59 according to the request for the drag and play with respect to the video stream selected among the video streams inputted through the signal input unit 51 or the video streams stored in a media storage unit 69. Then, the reproduction control unit 53 performs a control operation to reproduce the video stream from the desired location, which is selected by the drag and play control unit 59, on the display unit 55. Additionally, the reproduction control unit 53 manages a control of an overall media reproduction. In some cases, the reproduction control unit 53 provides a nonlinear video browsing (NLVB) function, including an intelligent drag and play, and a trick play function through a communication with the drag and play control unit 59 or an index management unit 60.

The drag and play control unit 59 selects the random access location corresponding to the user's request for the drag and play from the video stream under a control of the reproduction control unit 53. One of the candidate locations contained within the window, which is set up with reference to the selected random access, is selected as a desired location, and then, the result is provided to the reproduction control unit 53. At this time, the drag and play control unit 59 reads out the semantic/structural information or the GOS-based shot information, which is used in the intelligent skip, from the index storage unit 63 through a communication with the index management unit 60 and uses the read-out information to select the actually desired location.

The index management unit 60 reads out the corresponding information from the index storage unit 63 and provides the read-out information to the corresponding control units through a communication with the reproduction control unit 53, the drag and play control unit 59 and the main control unit 67. In addition, the index management unit 60 manages all of the index information obtained from the video stream.

In a recording mode, a recording control unit 57 converts the digital video/audio signals inputted through the signal input unit 51 into video streams and stores them in the media storage unit 69. At this time, the recoding control unit 57 provides the recoding video stream to an index generating unit 61, extracts the semantic/structural information, and stores the extracted information in the index storage unit 63.

The index generating unit 61 generates an index information about the semantic/structural information from the video streams provided under a control of the recoding control unit 57 by using an automatic video indexing and stores the index information in the index storage unit 63. If necessary, in order for the intelligent skip, the index generating unit 61 can generate an index information about the GOS information from the video streams and store the index information in the index storage unit 63.

Here, in case the index information about the semantic/structural information or the shot index information is directly provided from a contents provider, the index generating unit 61 is not needed.

The media storage unit 69 stores the video stream inputted through the signal input unit 51 during the recoding mode, and the index storage unit 63 stores the index information about the semantic/structural information or the shot index information.

The main control unit 67 functions to transmit commands of reproduction control/record control/ indexing generating control to the respective control units. At this time, the main control unit 67 can also control the respective control units according to the commands inputted from the user interface 65. Specifically, the command relating to the user's request for the drag and play is provided to the main control unit 67 through the user interface 65, and the main control unit 67 recognizes the command and transmits it to the reproduction control unit 53 and the drag and play control unit 59.

An operation of the drag and play in the video reproducing apparatus constructed as above will be described below.

First, if the user inputs the request for the drag and play through the user interface 65, the user's request is transmitted to the main control unit 67. The main control unit 67 judges whether or not the user's request relates to the drag and play and provides the corresponding control command to the reproduction control unit 53.

The reproduction control unit 53 enables the corresponding function to be operated by transmitting the control command to the drag and play control unit 59.

In other words, the drag and play control unit 59 judges whether the video stream requested from the user according to the control of the reproduction control unit 53 is the current video stream inputted through the signal input unit 51 or the video stream previously stored in the media storage unit 69, and then, reads out the corresponding video stream.

The drag and play control unit 59 selects the random access location, which corresponds to the drag and play requested by the user, from the video stream and sets up the window with reference to the selected location.

At this time, the drag and play control unit 59 reads out the semantic/structural information on the corresponding video stream from the index storage unit 63 through a communication with the index management unit 60, and then determines the candidate locations existing within the window by using the semantic/structural information.

The drag and play control unit 59 selects one of the candidate locations as the actually desired location by using the weights and then provides the selected information to the reproduction control unit 53. At this time, in case the user requests the intelligent skip, the actually desired location can be selected using the GOS-based shot information.

The reproduction control unit 53 switches a mode into a normal reproduction mode by changing the reproduction location to the actually desired location and displays the video stream reproduced from the corresponding location through the display unit 55.

In this manner, the video reproducing apparatus according to the present invention can remarkably improve the probability of reproducing the video stream from the actually desired location, which is selected by the drag and play control unit 59, by using the drag and play function and the intelligent skip function.

As described above, the video reproducing method and system of the present invention can remarkably improve the probability of reproducing the user's actually desired location by selecting and reproducing the optimum location within the predetermined section with reference to the location arbitrarily selected by the drag and play function.

Additionally, the video reproducing method and system of the present invention can reduce the demand of the user's key input by adding the intelligent skip function to the drag and play function.

Accordingly, there is an effect that can maximally reduce an unnecessary operation such as an additional key manipulation for reproducing a more accurate location at the location selected by the conventional drag and play. Due to the above effect, the performance of the video reproducing apparatus can be improved much more.

It will be apparent to those skilled in the art that various modifications and variations can be made in the present invention. Thus, it is intended that the present invention covers the modifications and variations of this invention provided they come within the scope of the appended claims and their equivalents.

## Claims

1. A video reproducing method, **characterized in that** a second movement location is selected among a plurality of candidate locations existing within a window, the window being set up with reference to a first movement location selected by a user's request for a drag and play.

2. A video reproducing method, comprising the steps of:
selecting a first movement location in a video stream;
setting up a window designating a predetermined section with reference to the first movement location;
selecting one of a plurality of candidate locations as a second movement location, the plurality of candidate locations existing within the window; and
performing a reproduction from the second movement location.

3. The video reproducing method according to claims 2 or 3, wherein the first movement location is selected by a drag and play function.

4. The video reproducing method according to claims 2 or 3, wherein the window is set up in one direction with reference to the first movement location.

5. The video reproducing method according to claims 2 or 3, wherein the window is set up in a bilateral time symmetry with reference to the first movement location.

6. The video reproducing method according to claims 2 or 3, wherein the window is set up considering weights according to a direction of the bilateral time symmetry with reference to the first movement location.

7. The video reproducing method according to claim 6, wherein a high weight is assigned to a forward window, in case the first movement location is a forward movement with reference to the current reproduction location.

8. The video reproducing method according to claim 6, wherein a high weight is assigned to a reverse window, in case the first movement location is a reverse movement with reference to the current reproduction location.

9. The video reproducing method according to claims 2 or 3, wherein the plurality of candidate locations are change locations of semantic/structural information existing within the window.

10. The video reproducing method according to claims 2 or 3, wherein the plurality of candidate locations are locations determined at the first movement location by an intelligent skip.

11. The video reproducing method according to claims 2 or 3, wherein the second movement location is selected by a weight according to an offset between the plurality of candidate locations and the first movement location.

12. The video reproducing method according to claims 2 or 3, wherein the second movement location is selected by weights according to lengths of semantic/structural segments existing within the window.

13. The video reproducing method according to claims 2 or 3, wherein the second movement location is selected by weights according to shot lengths existing within the window, in case the plurality of candidate locations are determined by an intelligent skip.

14. The video reproducing method according to claims 2 or 3, wherein the second movement location is selected considering both weights according to the offset between the candidate locations and the first movement location and weights according to lengths of semantic/structural segments.

15. A video reproducing method, comprising the steps of:
selecting a first movement location in a video stream according to a request for a drag and play;
setting up a window designating a predetermined section with reference to the first movement location;
selecting one of a plurality of candidate locations as a second movement location on a basis of the window, the plurality of candidate locations being determined according to the user's request for an intelligent skip; and
performing a reproduction from the second movement location.

16. The video reproducing method according to claim 15, wherein the window is set up in a bilateral time symmetry with reference to the first movement location.

17. The video reproducing method according to claim 15, wherein the plurality of candidates are change locations of one shot based on GOS information.

18. The video reproducing method according to claim 15, wherein the second movement location is selected by weights according to lengths of shots existing within the window.

19. A video reproducing system, comprising:
means for selecting a first movement location according to in a video stream according to a request for a drag and play;
means for setting up a window designating a predetermined section with reference to the first movement location;
means for selecting one of a plurality of candidate locations as a second movement location, the plurality of candidate locations existing within the window; and
means for performing a reproduction from the second movement location.

20. A video reproducing apparatus, comprising:
an input means for inputting a drag and play command;
a control means for selecting a first movement location according to the inputted drag and play command, selecting one of candidate locations as a second movement location, the candidate locations existing within a predetermined section with reference to the selected first movement location, and controlling a reproduction to be performed from the second movement location;
a media storage means for storing video streams to be provided according to a request of the control means;
an index storage means for storing semantic/structural information or shot information to be provided according to a request of the control means; and
a display means for displaying the video stream.
